# EUROPEAN PATENT APPLICATION

(11) **EP 4 769 170 A1**
(43) Date of publication of application: **01.07.2026**
(21) Application number: 25220457.3
(22) Date of filing: 03.12.2025
(51) Int. Cl.: G06F 16/17, G06F 3/06

(54) **DATA STORAGE METHOD, MEDIUM, ELECTRONIC DEVICE, AND PROGRAM PRODUCT**

(30) Priority: 31.12.2024 CN 202411997528
(71) Applicant: Beijing Oceanbase Technology Co., Ltd., Beijing 100102 (CN)
(72) Inventor: SUN, Zhoujia, Hangzhou, Zhejiang, 310000 (CN); ZHANG, Lei, Hangzhou, Zhejiang, 310000 (CN); BI, Nifei, Hangzhou, Zhejiang, 310000 (CN); HU, Tao, Hangzhou, Zhejiang, 310000 (CN); WAN, Quanwei, Hangzhou, Zhejiang, 310000 (CN); ZHUANG, Mingqiang, Hangzhou, Zhejiang, 310000 (CN)
(74) Representative: Winter, Brandl - Partnerschaft mbB

(57) **Abstract**

This specification provides a data storage method, a medium, an electronic device, and a program product. In this method, when processing to-be-written data, a server selects a data storage policy based on a condition of remaining target disk space. If the target disk space is sufficient, the server preferentially writes the data directly into the target disk space, and then uploads the data to an object storage system, to improve efficiency. If the target disk space is insufficient, the server reads a target file into an internal memory, performs a data append write operation in the internal memory, and directly uploads the target file from the internal memory to an object storage system after the data append write operation is completed, to avoid a data write exception due to the insufficient target disk space. Therefore, flexibility and reliability of data storage are improved.

## Description

### TECHNICAL FIELD

One or more embodiments of this specification relate to the field of data storage technologies, and in particular, to a data storage method, a medium, an electronic device, and a program product.

### BACKGROUND

Currently, a distributed relational database may be used to provide data storage and query functions, and achieve high availability, scalability, and fault tolerance of data. When data storage is performed by using the distributed relational database, a database management system of the distributed relational database generally writes, in an append write manner, data that needs to be added to the distributed relational database to a tail of a file, so that the new data can be written without affecting original data of the distributed relational database, thereby effectively managing data.

Generally, the database management system allocates corresponding disk space to a user. Therefore, when the user needs to upload a file, the user may perform a plurality of times of continuous append write operations, to gradually store, from a head of the file, data of the file into the disk space used by the user. In addition, after it is determined that the file is completely written into the disk space, the file written into the disk space is uploaded to an object storage system (where the object storage system herein is built on a distributed infrastructure and can store data across a plurality of data centers or even data nodes with dispersed geographic locations, and storage space of the object storage system is infinite for the user) by using a background task, and then the file uploaded by the user is deleted from the disk space, to release the disk space.

However, because a size of disk space allocated by the database management system for each user is usually limited, when a plurality of files are written into the disk space in a parallel manner, each file is not uploaded to the object storage system before the file is completely written into the disk space. Consequently, data of files that are not completely written into the disk space always occupies the disk space. If an amount of the data in the files that are not completely written into the disk space exceeds remaining disk space, the disk space is exhausted, and as a result, a new data write operation is blocked. Consequently, no new data can be written into the disk space used by the user, and normal operation of the database management system is affected.

### SUMMARY

In view of this, one or more embodiments of this specification provide the following technical solutions.

According to a first aspect of the one or more embodiments of this specification, a data storage method is provided, including:
obtaining to-be-written data and a file identifier corresponding to the to-be-written data, where the file identifier is used to represent a target file for storing the to-be-written data;
when remaining space of target disk space allocated on the storage service node is insufficient, obtaining the target file based on the file identifier, and loading the target file into an internal memory of the storage service node;
writing the to-be-written data into the target file in the internal memory, to obtain a first-type written target file, where storage space occupied by the first-type written target file is greater than storage space occupied by the target file; and
uploading the first-type written target file from the internal memory to an object storage system for storage.

According to a second aspect of the one or more embodiments of this specification, an electronic device is provided, including: a processor; and a memory configured to store processor executable instructions. The processor executes the executable instructions to implement steps of the foregoing data storage method.

According to a third aspect of the one or more embodiments of this specification, a computer-readable storage medium is provided, storing computer instructions. When the instructions are executed by a processor, steps of the foregoing data storage method are implemented.

According to a fourth aspect of the one or more embodiments of this specification, a computer program product is provided, including a computer program/instructions. When the computer program/instructions are executed by a processor, steps of the foregoing data storage method are implemented.

It can be learned from the foregoing embodiments that, in this specification, the to-be-written data and the file identifier that corresponds to the to-be-written data and that is used to represent the target file for storing the to-be-written data are obtained. When the remaining space of the target disk space allocated on the storage service node is insufficient, the target file is obtained based on the file identifier, and loaded into the internal memory of the storage service node, to write the to-be-written data into the target file in the internal memory and obtain the first-type written target file. The storage space occupied by the first-type written target file is greater than the storage space occupied by the target file. The first-type written target file is uploaded from the internal memory to the object storage system for storage.

In this method, when the target disk space is insufficient, the target file may be read into the internal memory, a data append write operation is performed in the internal memory, and the target file is directly uploaded from the internal memory to the object storage system after the data append write operation is completed, to avoid a data write exception due to the insufficient target disk space, thereby improving flexibility and reliability of data storage.

### BRIEF DESCRIPTION OF THE DRAWINGS

FIG. 1 is a schematic flowchart of a data storage method according to an exemplary embodiment;
FIG. 2 shows a first file upload method according to an exemplary embodiment;
FIG. 3 shows a second file upload method according to an exemplary embodiment;
FIG. 4 shows a third file upload method according to an exemplary embodiment;
FIG. 5 shows a fourth file upload method according to an exemplary embodiment;
FIG. 6 is a schematic diagram of a multi-version file storage method according to an exemplary embodiment;
FIG. 7 is a schematic diagram of a file deletion method according to an exemplary embodiment;
FIG. 8 is a schematic diagram of a file split method according to an exemplary embodiment;
FIG. 9 is a schematic diagram of a structure of a device according to an exemplary embodiment; and
FIG. 10 is a block diagram of a data storage apparatus according to an exemplary embodiment.

### DETAILED DESCRIPTION

To make the objectives, technical solutions, and advantages of this specification clearer, the technical solutions of this specification will be described below with reference to specific embodiments of this specification and corresponding accompanying drawings. It is clear that the described embodiments are only some embodiments rather than all the embodiments of this specification. All other embodiments obtained by a person of ordinary skill in the art based on the embodiments of this specification without creative efforts shall fall within the protection scope of this specification.

Currently, when providing data storage and query functions for a user, a distributed relational database may pre-allocate, to the user, disk space available for the user (to be specific, a local disk allocated by the distributed relational database to the user for use) on a server node of the distributed relational database. Therefore, when the user needs to upload a temporary file to the distributed relational database, the user may perform a plurality of times of continuous append write operations, to gradually store, from a file head of the temporary file, data of the temporary file into a target file in the disk space used by the user. The target file herein refers to a file that is created in the disk space used by the user and that is used to receive and store the data of the temporary file. After it is determined that the temporary file is completely written into the disk space, the target file written into the disk space is uploaded to an object storage system by using a background task, and the target file stored in the disk space is deleted, to release the disk space.

However, in an actual application scenario, when the user simultaneously uploads a plurality of files within short duration, the files may be written into the disk space in a parallel manner. Each file is not uploaded to the object storage system before the file is completely written into the disk space. Consequently, data of files that are not completely written into the disk space always occupies the disk space. If an amount of the data in the files that are not completely written into the disk space exceeds remaining disk space, the disk space is exhausted.

For example, when the user simultaneously uploads a large quantity of log files (such as a log file A, a log file B, and a log file C), the log file A, the log file B, and the log file C may be simultaneously written into the disk space in a parallel manner. When fifty percent of the log file A, thirty percent of the log file B, and sixty percent of the log file C have been written, the files that have been written into the disk space may fully occupy the remaining space in the disk space. In this case, the remaining fifty percent of the log file A, the remaining seventy percent of the log file B, and the remaining forty percent of the log file C cannot continue to be written into the disk space. Consequently, normal operation of the database management system is affected.

The technical solutions provided in the embodiments of this specification are described in detail below with reference to the accompanying drawings.

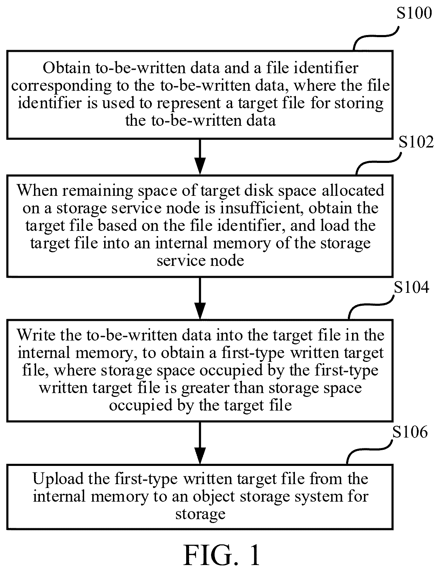

FIG. 1 is a schematic flowchart of a data storage method according to an exemplary embodiment. The method includes the following steps.

S 100: Obtain to-be-written data and a file identifier corresponding to the to-be-written data, where the file identifier is used to represent a target file for storing the to-be-written data.

In this specification, when receiving a temporary file that needs to be uploaded, for each append write operation in a process in which data in the temporary file is written into the target file, a service platform may use, as the to-be-written data, data that needs to be written into the target file in the append write operation, and may obtain the file identifier of the target file for storing the to-be-written data as the file identifier corresponding to the to-be-written data. Therefore, the target file for storing the to-be-written data may be determined in disk space allocated to a user or a preset object storage system based on the file identifier corresponding to the to-be-written data, and the to-be-written data may be further written into the target file.

The to-be-written data may refer to at least a part of the data included in the temporary file that needs to be stored in a distributed relational database. The to-be-written data may be obtained by using a plurality of methods. For example, the to-be-written data is determined based on a file upload request sent by the user. For another example, data imported by an external system is received as the to-be-written data. The external system herein may be a log file management system, an e-commerce system, a real-time data analysis platform, or the like. For another example, sensor data collected through a preset sensor device is obtained as the to-be-written data.

Target disk space refers to disk space allocated by a storage service node (to be specific, a node used to store and manage data in the distributed relational database) of the distributed relational database to the user, and used in a process in which to-be-written data included in a file that needs to be uploaded by the user is written into the target file when the user uploads the file.

Certainly, the target disk space may alternatively be cloud disk space allocated by the storage service node of the distributed relational database to the user.

The object storage system may refer to a system that accesses and operates, through network connection, storage devices and data located at different geographic locations. In addition, the object storage system herein may alternatively be another remote storage system such as a distributed file storage system or a blockchain storage system.

In this specification, an execution entity configured to implement the data storage method may refer to a specified device disposed in the distributed relational database, such as the storage service node, or may refer to a device such as a server, a desktop computer, or a notebook computer. For ease of description, the data storage method provided in this specification is described below by using an example in which a server is the execution entity.

S102: When remaining space of the target disk space allocated on the storage service node is insufficient, obtain the target file based on the file identifier, and load the target file into an internal memory of the storage service node.

S104: Write the to-be-written data into the target file in the internal memory, to obtain a first-type written target file, where storage space occupied by the first-type written target file is greater than storage space occupied by the target file.

S106: Upload the first-type written target file from the internal memory to the object storage system for storage.

In this specification, when the server needs to write the to-be-written data into the target file, the server may first determine, based on the obtained file identifier, whether the target file exists. When determining that the target file exists, the server may select, based on whether the target file is stored in the target disk space or the object storage system and whether the remaining space of the target disk space is sufficient, an optimal data storage policy to store the to-be-written data into the target file.

Specifically, the server may obtain file storage location data from the internal memory, and determine, based on the file storage location data and the file identifier, whether the target file exists. When determining that the target file exists, the server may further determine whether the target file is stored in the target disk space or the object storage system.

The internal memory may be an internal memory in the storage service node of the distributed relational database.

The file storage location data is used to record a storage location of a target file corresponding to each file that is uploaded in progress.

It should be noted that, when the server determines that the target file exists and needs to write the to-be-written data into the target file, there may be four different cases. The four cases are respectively described in detail below.

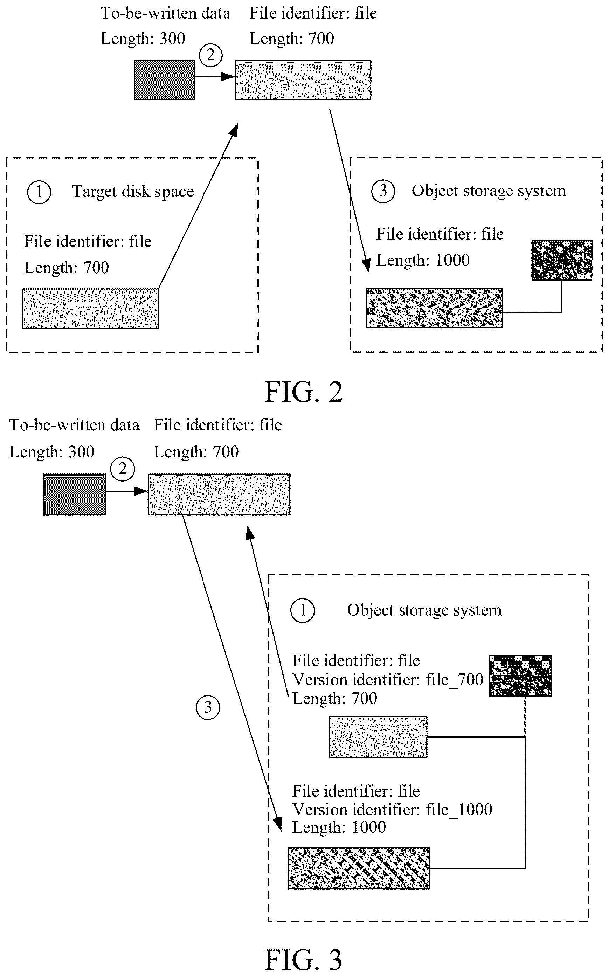

In a first case, the target file is stored in the target disk space, and the remaining space of the target disk space is insufficient. In this case, the server may perform file upload by using a first file upload method, which is specifically shown in FIG. 2.

FIG. 2 shows the first file upload method according to an exemplary embodiment.

It can be learned with reference to FIG. 2 that the server may obtain the target file from the target disk space based on the file identifier, and load the target file into the internal memory of the storage service node, to write the to-be-written data into the target file in the internal memory, so as to obtain the first-type written target file. Further, the first-type written target file may be uploaded from the internal memory to the object storage system for storage.

In a second case, the target file is stored in the object storage system, and the remaining space of the target disk space is insufficient. In this case, the server may perform file upload by using a second file upload method, which is specifically shown in FIG. 3.

FIG. 3 shows the second file upload method according to an exemplary embodiment.

It can be learned with reference to FIG. 3 that the server may obtain the target file from the object storage system based on the file identifier, and load the target file into the internal memory, to write the to-be-written data into the target file in the internal memory, so as to obtain the first-type written target file. Further, the first-type written target file may be uploaded from the internal memory to the object storage system for storage.

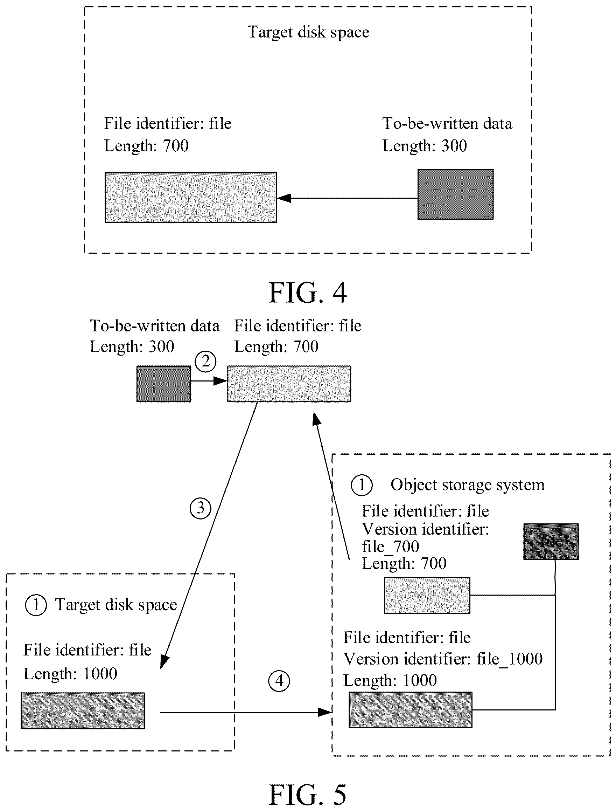

In a third case, the target file is stored in the target disk space, and the remaining space of the target disk space is sufficient. In this case, the server may perform file upload by using a third file upload method, which is specifically shown in FIG. 4.

FIG. 4 shows the third file upload method according to an exemplary embodiment.

It can be learned with reference to FIG. 4 that, when determining, based on the file storage location data and the file identifier, that the target file is stored in the target disk space, the server may write the to-be-written data into the target file in the target disk space, to obtain a second-type written target file, and upload the second-type written target file to the object storage system for storage.

In a fourth case, the target file is stored in the object storage system, and the remaining space of the target disk space is sufficient. In this case, the server may perform file upload by using a fourth file upload method, which is specifically shown in FIG. 5.

FIG. 5 shows the fourth file upload method according to an exemplary embodiment.

It can be learned with reference to FIG. 5 that, when determining, based on the file storage location data and the file identifier, that the target file is stored in the object storage system, the server may obtain the target file from the object storage system and load the target file into the internal memory, to write the to-be-written data into the target file in the internal memory and obtain a third-type written target file, and store the third-type written target file into the target disk space, to upload the third-type written target file from the target disk space to the object storage system for storage.

In addition, because the target disk space is mounted by an operating system installed in the server, the server can directly access data in the target disk space. However, data stored in the object storage system needs to be read and written by the server by using a network. Therefore, performance of writing a file into the target disk space is much higher than performance of writing a file into the object storage system.

Therefore, to improve file write performance, when determining that the target file does not exist and the remaining space of the target disk space is sufficient, the server may preferentially create the target file in the target disk space, write the to-be-written data into the target file in the target disk space, to obtain a fourth-type written target file, and after write is completed, upload the fourth-type written target file to the object storage system for storage.

In this specification, the server may determine whether the remaining space of the target disk space is sufficient by using a plurality of methods. For example, the server may determine whether the remaining space of the target disk space is sufficient based on whether the remaining space of the target disk space is greater than a specified threshold.

For another example, the server may determine whether the remaining space of the target disk space is sufficient based on whether the remaining space of the target disk space is greater than space required when the to-be-written data is written.

Alternatively, the server may obtain historical occupancy data of the target disk space; determine an occupancy increase coefficient of the target disk space based on the historical occupancy data; determine, based on the occupancy increase coefficient, estimated occupied space of the target disk space in a future specified time period; and determine whether the remaining space of the target disk space is sufficient based on whether the remaining space of the target disk space is greater than the estimated occupied space.

The historical occupancy data is used to reflect space usage of the target disk space in a past specified time period. A larger occupancy increase coefficient indicates a larger increase of the space usage of the target disk space in the past specified time period.

It should be noted that, when a file needs to be uploaded to the object storage system, a response to a file upload request may expire due to a reason such as a network exception. In a period in which the object storage system still responds to a file upload request sent at the first time, the server may send a new file upload request. After storing a file in response to a file upload request sent at the second time, the object storage system may receive the file upload request sent at the first time again, and further store a file again in response to the file upload request sent at the first time. In this case, the file stored by the object storage system in response to the file upload request sent of the first time overwrites the file stored in response to the file upload request of the second time. Consequently, a data error or a data loss occurs.

For example, when the server uploads data from the 0^{th} MB to the 2^{nd} MB in a file A to the object storage system, a response to a file upload request for uploading the data from the 0^{th} MB to the 2^{nd} MB in the file A may expire due to a network exception. During this period, the server may upload data from the 0^{th} MB to the 3^{rd} MB in the file A to the object storage system. In this case, the object storage system may store the data from the 0^{th} MB to the 3^{rd} MB in the file A in response to a file upload request for uploading the data from the 0^{th} MB to the 3^{rd} MB in the file A. However, the object storage system may subsequently store the data from the 0^{th} MB to the 2^{nd} MB in the file A in response to the file upload request for uploading the data from the 0^{th} MB to the 2^{nd} MB in the file A, and the stored data from the 0^{th} MB to the 2^{nd} MB in the file A may overwrite the previously stored data from the 0^{th} MB to the 3^{rd} MB in the file A. Consequently, data from the 2^{nd} MB to the 3^{rd} MB in the file A may be lost.

To avoid the foregoing condition, in this specification, when the server needs to upload a file to the object storage system, the server may determine, based on a size of the file that needs to be uploaded, a version identifier of the file that needs to be uploaded, and upload the file that needs to be uploaded and the version identifier of the file that needs to be uploaded to the object storage system for corresponding storage.

A larger size of the file that needs to be uploaded indicates a higher newness degree that is of the file that needs to be uploaded and that is represented by the version identifier of the file that needs to be uploaded. In other words, for files of different versions, newness of the versions may be determined based on sizes of the files. Specifically, if a file of a version has a larger size, a version identifier corresponding to the file usually indicates that the file is a file of a later version.

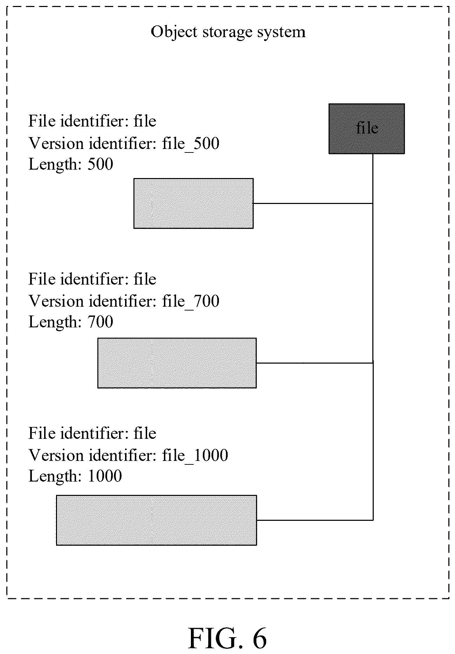

For ease of understanding, as shown in FIG. 6, the foregoing method is described in detail below by using an example in which the file that needs to be uploaded is the first-type written target file.

FIG. 6 is a schematic diagram of a multi-version file storage method according to an exemplary embodiment.

It can be learned with reference to FIG. 6 that the server may determine a version identifier of the first-type written target file based on a size of the first-type written target file, and upload the first-type written target file and the version identifier to the object storage system, to correspondingly store the first-type written target file and the version identifier. As shown in FIG. 6, file_500 is a determined version identifier of a first-type written target file whose size is 500, file_700 is a determined version identifier of a first-type written target file whose size is 700, and file_1000 is a determined version identifier of a first-type written target file whose size is 1000. The first-type written target file corresponding to file_1000 is a first-type written target file of a latest version.

It can be learned from the foregoing content that, when the target file is stored in the object storage system, there may be a plurality of target files corresponding to the file identifier, that is, target files of different versions. In this case, when the target file is stored in the object storage system, the server may determine, based on the file identifier, candidate files stored in the object storage system. The server may further determine, from the candidate files based on version identifiers of the candidate files, a candidate file of a latest version as the target file, and load the target file into the internal memory.

Different candidate files correspond to the same file identifier, and version identifiers of the different candidate files are different.

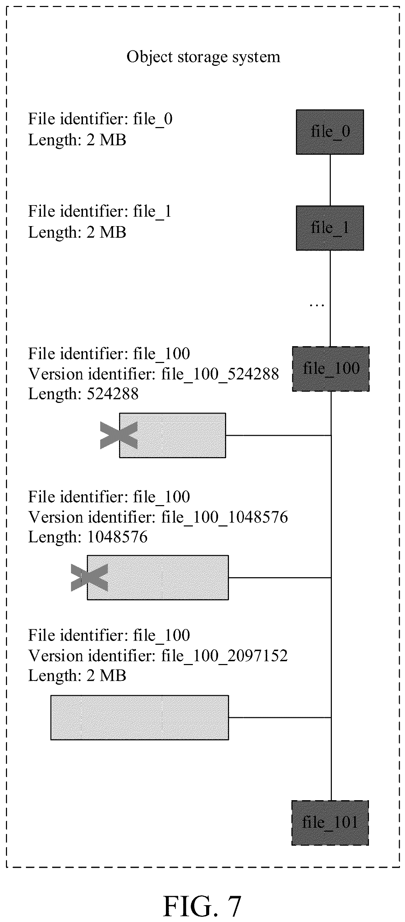

It can be learned from the foregoing content that, in a process in which the target file is uploaded, target files of a plurality of historical versions may be generated. As specifically shown in FIG. 7, to avoid occupation of the target files of the historical versions in storage space of the object storage system, each time uploading the written target file, the server may further determine and delete a target file of a historical version stored in the object storage system.

FIG. 7 is a schematic diagram of a file deletion method according to an exemplary embodiment.

It can be learned with reference to FIG. 7 that the server may determine, based on the file identifier of the target file, each historical version identifier corresponding to the target file. Further, the server may determine a historical target file based on the historical version identifier corresponding to the target file, and add a deletion operation instruction for the historical target file to a preset background deletion task queue, to asynchronously delete the historical target file.

As shown in FIG. 7, the server may determine historical version identifiers file_100_524288 and file_100_1048576 based on a file identifier file_100 of the target file, and may further add historical target files corresponding to the historical version identifiers file_100_524288 and file_100_1048576 to the preset background deletion task queue for deletion.

Certainly, after it is determined that the first-type written target file is completely uploaded to the object storage system, the server may alternatively add a deletion operation instruction for the target file to the preset background deletion task queue, to asynchronously delete the target file stored in the object storage system.

It should be noted that, when the target file is stored in the target disk space, the server may delete the target file from the target disk space after it is determined that the first-type written target file is successfully uploaded to the object storage system.

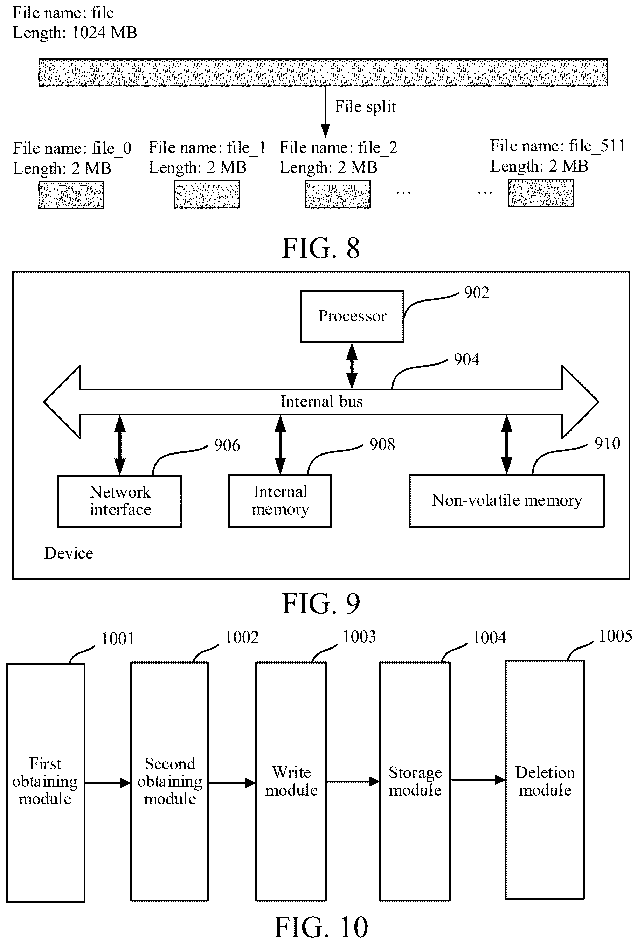

In addition, when a size of a file that needs to be stored is large, large data read and write overheads and large internal memory overheads may be caused when the foregoing method is used to read the file of the large size into the internal memory and perform append write. Therefore, as shown in FIG. 8, when determining that the size of the file that needs to be stored exceeds a preset partition threshold, the server may split, into a plurality of segmented files for respective storage, the file that needs to be stored.

FIG. 8 is a schematic diagram of a file split method according to an exemplary embodiment.

It can be learned with reference to FIG. 8 that, for a file named file that needs to be split, the server may split the file into a plurality of segmented files of a fixed size (for example, 2 MB), and regards each of the segmented files as an independent file for file upload. For each of the segmented files, a file name of the segmented file is a file identifier of the file that needs to be stored and a data offset in the segmented file. For example, in FIG. 7, a file identifier of a file that needs to be stored is file. For the first segmented file, a file name of the segmented file is file_0, for the second segmented file, a file name of the segmented file is file_1, for the third segmented file, a file name of the segmented file is file_2, and so on.

It can be learned from the foregoing content that, when the server obtains, based on the file identifier, the target file stored in the target disk space or the object storage system, the file corresponding to the file identifier may include a plurality of segmented files. Therefore, when the file corresponding to the file identifier includes the plurality of segmented files, a segmented file located at a last location is determined, as the target file, from the segmented files based on identifiers corresponding to the segmented files (where a sequence of the segmented files is determined based on the identifiers corresponding to the segmented files, to determine a last segmented file in the segmented files, that is, the segmented file located at the last location), and the target file is read into the internal memory. Further, the to-be-written data may be written into the target file. The identifiers herein are used to represent the sequence of the segmented files, and different segmented files include data of different parts of the file corresponding to the file identifier.

In a process in which the server writes the to-be-written data into the target file, written data may be partitioned based on a total amount of the written data and a preset partition length, and partitioned written data is stored into the plurality of segmented files.

The written data may include the to-be-written data and data already stored in the target file. In this case, the server may partition the written data based on the total amount of the written data and the preset partition length, and store the partitioned written data into the plurality of segmented files.

Specifically, before writing the to-be-written data into the target file, the server may determine whether the total amount of the to-be-written data and the data already stored in the target file exceeds the preset partition length. If the total amount exceeds the preset partition length, the server may write at least a part of the to-be-written data into the target file based on the preset partition length, partition remaining data in the to-be-written data based on a size of the remaining data in the to-be-written data and the preset partition length, and store the remaining data in the plurality of segmented file. Further, the server may use, as the first-type written target files, both the target file into which the part of the to-be-written data is already written and the segmented file in which the at least part of the to-be-written data is stored.

In addition, after writing the to-be-written data into the target file, the server may further determine whether a size of the written data stored in the target file exceeds the preset partition length. If the size of the written data exceeds the preset partition length, the server may partition, based on the preset partition length, the target file in which the written data is stored into a plurality of segmented files, and may further use, as the first-type written target file, each of the segmented files in which at least a part of the to-be-written data is stored.

It should be noted that the partition length may be determined by using a plurality of methods. For example, a preset fixed value (such as 2 MB) is used as the partition length. For another example, the partition length is determined based on a current network environment (for example, a network bandwidth or a network delay) of the storage service node. For example, if it is determined that a current network delay of the storage service node is smaller, the determined partition length is larger.

It should be noted that, for each segmented file, the server may determine a version identifier of the segmented file based on a size of the segmented file, and correspondingly store the segmented file and the version identifier of the segmented file into the object storage system.

It can be learned from the foregoing content that the server may preferentially write the to-be-written data into the target disk space and then upload the to-be-written data from the target disk space to the object storage system when the remaining space of the target disk space that needs to be used in a process in which the to-be-written data is written into the target file is sufficient, to improve data writing efficiency. However, when it is determined that the remaining space of the target disk space is insufficient, the server may load the target file stored in the target disk space into the internal memory, to append write the to-be-written data into the target file in the internal memory and directly upload the written target file in the internal memory to the object storage system after write is completed. Further, an exception caused when new data cannot be written into the target disk space can be avoided.

FIG. 9 is a schematic diagram of a structure of a device according to an exemplary embodiment. Refer to FIG. 9, from a perspective of hardware, the device includes a processor 902, an internal bus 904, a network interface 906, an internal memory 908, and a non-volatile memory 910, and certainly may further include hardware required by another function. One or more embodiments of this specification may be implemented in a software manner. For example, the processor 902 reads a corresponding computer program from the non-volatile memory 910 to the internal memory 908 and then runs the computer program. Certainly, in addition to a software implementation, one or more embodiments of this specification do not exclude other implementations, for example, logic devices or a software-hardware combination. That is, execution bodies of the following processing procedures are not limited to logic units and may alternatively be hardware or logic devices.

Refer to FIG. 10, a data storage apparatus may be used in the device shown in FIG. 9, to implement the technical solutions of this specification. The data storage apparatus may include:
a first obtaining module 1001, configured to obtain to-be-written data and a file identifier corresponding to the to-be-written data, where the file identifier is used to represent a target file for storing the to-be-written data;
a second obtaining module 1002, configured to: when remaining space of target disk space allocated on the storage service node is insufficient, obtain the target file based on the file identifier, and load the target file into an internal memory of the storage service node;
a write module 1003, configured to write the to-be-written data into the target file in the internal memory, to obtain a first-type written target file, where storage space occupied by the first-type written target file is greater than storage space occupied by the target file; and
a storage module 1004, configured to upload the first-type written target file from the internal memory to an object storage system for storage.

Optionally, the second obtaining module 1002 is specifically configured to: when the target file is stored in the object storage system, determine, based on the file identifier, candidate files having different version identifiers, corresponding to the same file identifier, and stored in the object storage system; and determine, from the candidate files based on the version identifiers of the candidate files, a candidate file of a latest version as the target file, and load the target file into the internal memory of the storage service node.

Optionally, the second obtaining module 1002 is specifically configured to: when the file corresponding to the file identifier includes a plurality of segmented files, determine, from the segmented files based on identifiers corresponding to the segmented files, a segmented file located at a last location as the target file, where the identifiers are used to represent a sequence of the segmented files, and different segmented files include data of different parts of the file corresponding to the file identifier.

Optionally, the write module 1003 is specifically configured to partition written data based on a total amount of the written data and a preset partition length, and store partitioned written data into a plurality of segmented files.

Optionally, the apparatus further includes a deletion module 1005.

The deletion module 1005 is specifically configured to: if the target file is obtained from the target disk space, delete the target file from the target disk space after it is determined that the first-type written target file is successfully uploaded to the object storage system; or if the target file is obtained from the object storage system, add a deletion operation instruction for the target file to a background deletion task queue after it is determined that the first-type written target file is successfully uploaded to the object storage system, to asynchronously delete the target file stored in the object storage system.

Optionally, the write module 1003 is specifically configured to obtain file storage location data when the remaining space of the target disk space is sufficient; and if it is determined, based on the file storage location data, that the target file is stored in the target disk space, write the to-be-written data into the target file in the target disk space, to obtain a second-type written target file, and upload the second-type written target file from the target disk space to the object storage system for storage; or if it is determined, based on the file storage location data, that the target file is stored in the object storage system, obtain the target file from the object storage system and load the target file into the internal memory, to write the to-be-written data into the target file in the internal memory and obtain a third-type written target file, and store the third-type written target file into the target disk space, to upload the third-type written target file from the target disk space to the object storage system for storage.

Optionally, the write module 1003 is specifically configured to obtain file storage location data when the remaining space of the target disk space is sufficient; if it is determined, based on the file storage location data, that the target file does not exist, create the target file in the target disk space; write the to-be-written data into the target file in the target disk space, to obtain a fourth-type written target file; and upload the fourth-type written target file to the object storage system for storage.

Based on a conception the same as that of the foregoing method, this specification further provides an electronic device, including: a processor; and a memory configured to store processor executable instructions. The processor executes the executable instructions to implement steps of the method in any one of the foregoing embodiments.

Based on a conception the same as that of the foregoing method, this specification further provides a computer-readable storage medium, storing computer instructions. When the instructions are executed by a processor, steps of the method in any one of the foregoing embodiments are implemented.

Based on a conception the same as that of the foregoing method, this specification further provides a computer program product, including a computer program/instructions. When the computer program/instructions are executed by a processor, steps of the method in any one of the foregoing embodiments are implemented.

## Claims

1. A data storage method, applied to a storage service node, wherein the method comprises:
obtaining to-be-written data and a file identifier corresponding to the to-be-written data, wherein the file identifier is used to represent a target file for storing the to-be-written data;
when remaining space of target disk space allocated on the storage service node is insufficient, obtaining the target file based on the file identifier, and loading the target file into an internal memory of the storage service node;
writing the to-be-written data into the target file in the internal memory, to obtain a first-type written target file, wherein storage space occupied by the first-type written target file is greater than storage space occupied by the target file; and
uploading the first-type written target file from the internal memory to an object storage system for storage.

2. The method according to claim 1, wherein the obtaining the target file based on the file identifier, and loading the target file into an internal memory of the storage service node specifically comprises:
when the target file is stored in the object storage system, determining, based on the file identifier, candidate files having different version identifiers, corresponding to the same file identifier, and stored in the object storage system; and
determining, from the candidate files based on the version identifiers of the candidate files, a candidate file of a latest version as the target file, and loading the target file into the internal memory of the storage service node.

3. The method according to claim 1, wherein the obtaining the target file based on the file identifier, and loading the target file into an internal memory of the storage service node further comprises:
when the file corresponding to the file identifier comprises a plurality of segmented files, determining, from the segmented files based on identifiers corresponding to the segmented files, a segmented file located at a last location as the target file, wherein the identifiers are used to represent a sequence of the segmented files, and different segmented files comprise data of different parts of the file corresponding to the file identifier.

4. The method according to claim 1, wherein the writing the to-be-written data into the target file in the internal memory, to obtain a first-type written target file specifically comprises:
partitioning written data based on a total amount of the written data and a preset partition length, and storing partitioned written data into a plurality of segmented files.

5. The method according to claim 1, further comprising:
if the target file is obtained from the target disk space, deleting the target file from the target disk space after it is determined that the first-type written target file is successfully uploaded to the object storage system; or
if the target file is obtained from the object storage system, adding a deletion operation instruction for the target file to a background deletion task queue after it is determined that the first-type written target file is successfully uploaded to the object storage system, to asynchronously delete the target file stored in the object storage system.

6. The method according to claim 1, further comprising:
obtaining file storage location data when the remaining space of the target disk space is sufficient; and
if it is determined, based on the file storage location data, that the target file is stored in the target disk space, writing the to-be-written data into the target file in the target disk space, to obtain a second-type written target file, and uploading the second-type written target file from the target disk space to the object storage system for storage; or
if it is determined, based on the file storage location data, that the target file is stored in the object storage system, obtaining the target file from the object storage system and loading the target file into the internal memory, to write the to-be-written data into the target file in the internal memory and obtain a third-type written target file, and storing the third-type written target file into the target disk space, to upload the third-type written target file from the target disk space to the object storage system for storage.

7. The method according to claim 1, further comprising:
obtaining file storage location data when the remaining space of the target disk space is sufficient;
if it is determined, based on the file storage location data, that the target file does not exist, creating the target file in the target disk space;
writing the to-be-written data into the target file in the target disk space, to obtain a fourth-type written target file; and
uploading the fourth-type written target file to the object storage system for storage.

8. An electronic device, comprising: a processor; and a memory configured to store processor executable instructions, wherein the processor executes the executable instructions to implement steps of the method according to any one of claims 1 to 7.

9. A computer-readable storage medium, storing computer instructions, wherein when the instructions are executed by a processor, steps of the method according to any one of claims 1 to 7 are implemented.

10. A computer program product, comprising a computer program/instructions, wherein when the computer program/instructions are executed by a processor, steps of the method according to any one of claims 1 to 7 are implemented.
